# EUROPEAN PATENT APPLICATION

(11) **EP 4 718 230 A1**
(43) Date of publication of application: **01.04.2026**
(21) Application number: 24939252.3
(22) Date of filing: 05.06.2024
(51) Int. Cl.: G06F 3/06

(54) **DATA STORAGE METHOD AND APPARATUS, AND COMPUTER-READABLE STORAGE MEDIUM**

(30) Priority: 22.05.2024 CN 202410641911
(71) Applicant: Sineng Electric Co., Ltd., Wuxi, Jiangsu 214174 (CN)
(72) Inventor: ZHANG, He, Wuxi, Jiangsu 214174 (CN); XIAO, Liujie, Wuxi, Jiangsu 214174 (CN); TIAN, Kang, Wuxi, Jiangsu 214174 (CN)
(74) Representative: Bayramoglu et al.
(86) International application number: PCT/CN2024/097536
(87) International publication number: WO 2025/241226

(57) **Abstract**

This application relates to the field of data storage, and provides a data storage method and apparatus and a computer-readable storage medium, to improve data storage efficiency. The method includes: determining a first primary storage sector in a plurality of primary storage sectors of a storage device, where the primary storage sector includes a plurality of primary storage pages, the primary storage page includes a first storage area, the first storage area is configured to store external data, a first primary storage page does not exist in a plurality of primary storage pages of the first primary storage sector, and external data exists in a first storage area of the first primary storage page; storing to-be-stored external data in the first primary storage sector; and erasing data in a second primary storage sector in the plurality of primary storage sectors, where the second primary storage sector is a primary storage sector next to the first primary storage sector.

## Description

### TECHNICAL FIELD

This application relates to the field of data storage, and in particular, to a data storage method and apparatus and a computer-readable storage medium.

### BACKGROUND

To implement data storage, data is usually stored in a storage device. For example, the storage device may be a flash memory.

In an existing solution, data storage efficiency is low during data storage.

### SUMMARY

### Technical Problem

An objective of embodiments of this application is to provide a data storage method and apparatus and a computer-readable storage medium.

### Technical Solution

The following technical solutions are used in this application.

According to a first aspect, a data storage method is provided. The method includes: determining a first primary storage sector in a plurality of primary storage sectors of a storage device, where the primary storage sector includes a plurality of primary storage pages, the primary storage page includes a first storage area, the first storage area is configured to store external data, a first primary storage page does not exist in a plurality of primary storage pages of the first primary storage sector, and external data exists in a first storage area of the first primary storage page; storing to-be-stored external data in the first primary storage sector; and erasing data in a second primary storage sector in the plurality of primary storage sectors, where the second primary storage sector is a primary storage sector next to the first primary storage sector.

According to a second aspect, a data storage apparatus is provided to implement the data storage method in the first aspect. The data storage apparatus includes corresponding modules, units, or means (means) for implementing the foregoing method. The modules, the units, or the means may be implemented by using hardware, software, or executing corresponding software by using hardware. The hardware or the software includes one or more modules or units corresponding to the foregoing functions.

With reference to the second aspect, in some implementations of the second aspect, the apparatus includes a determining module and a processing module. The determining module is configured to determine a first primary storage sector in a plurality of primary storage sectors of a storage device, where the primary storage sector includes a plurality of primary storage pages, the primary storage page includes a first storage area, the first storage area is configured to store external data, a first primary storage page does not exist in a plurality of primary storage pages of the first primary storage sector, and external data exists in a first storage area of the first primary storage page; the processing module is configured to store to-be-stored external data in the first primary storage sector; and the processing module is further configured to erase data in a second primary storage sector in the plurality of primary storage sectors, where the second primary storage sector is a primary storage sector next to the first primary storage sector.

According to a third aspect, a data storage apparatus is provided, including at least one processor and a memory configured to store instructions executable by the processor, where the processor is configured to execute the instructions, to implement the method provided in the first aspect and any possible implementation thereof.

According to a fourth aspect, a computer-readable storage medium is provided. When instructions in the computer-readable storage medium are executed by a processor in a data storage apparatus, the data storage apparatus is enabled to perform the method provided in the first aspect and any possible implementation thereof.

According to a fifth aspect, a computer program product including instructions is provided. When the instructions are run on a computer, the computer is enabled to perform the method provided in the first aspect and any possible implementation thereof.

According to a sixth aspect, a chip system is provided, including a processor and an interface circuit. The interface circuit is configured to receive a computer program or instructions and transmit the computer program or the instructions to the processor. The processor is configured to execute the computer program or the instructions, to enable the chip system to perform the method provided in the first aspect and any possible implementation thereof.

### Beneficial Effects

Based on this solution, an empty first primary storage sector in the plurality of primary storage sectors of the storage device is determined, the to-be-stored external data is stored in the first primary storage sector, and the data in the second primary storage sector in the plurality of primary storage sectors is erased. Because the second primary storage sector is the primary storage sector next to the first primary storage sector, the data in the next primary storage sector can be erased while the external data is stored in the first primary storage sector. In this way, the storage device always has an empty primary storage sector. Therefore, when data is stored again subsequently, the data may be directly stored without performing data erasing first, thereby improving data storage efficiency.

### BRIEF DESCRIPTION OF THE DRAWINGS

FIG. 1 is a schematic diagram of an architecture of a data storage system according to this application;
FIG. 2 is a schematic flowchart of a data storage method according to this application;
FIG. 3 is a schematic flowchart of another data storage method according to this application;
FIG. 4 is a schematic flowchart of another data storage method according to this application;
FIG. 5 is a schematic flowchart of another data storage method according to this application;
FIG. 6 is a schematic flowchart of another data storage method according to this application;
FIG. 7 is a schematic diagram of a structure of a data storage apparatus according to this application; and
FIG. 8 is a schematic diagram of a structure of another data storage apparatus according to this application.

### DESCRIPTION OF THE EMBODIMENTS

To implement data storage, data is usually stored in a storage device. For example, the storage device may be a flash memory.

In an existing solution, when data is stored, whether there is an empty storage sector in a plurality of storage sectors of a storage device is usually first determined. If there is no empty storage sector, data in one storage sector needs to be erased, and then the data is stored in the storage sector.

As time goes by, each of the plurality of storage sectors of the storage device has data stored therein. Therefore, in this solution, the data in the storage sector needs to be erased before the data is stored. In this case, the data cannot be directly stored, resulting in low data storage efficiency.

To resolve the foregoing problem, this application provides a data storage method. The method includes: determining a first primary storage sector in a plurality of primary storage sectors of a storage device, where the primary storage sector includes a plurality of primary storage pages, the primary storage page includes a first storage area, the first storage area is configured to store external data, a first primary storage page does not exist in a plurality of primary storage pages of the first primary storage sector, and external data exists in a first storage area of the first primary storage page; storing to-be-stored external data in the first primary storage sector; and erasing data in a second primary storage sector in the plurality of primary storage sectors, where the second primary storage sector is a primary storage sector next to the first primary storage sector.

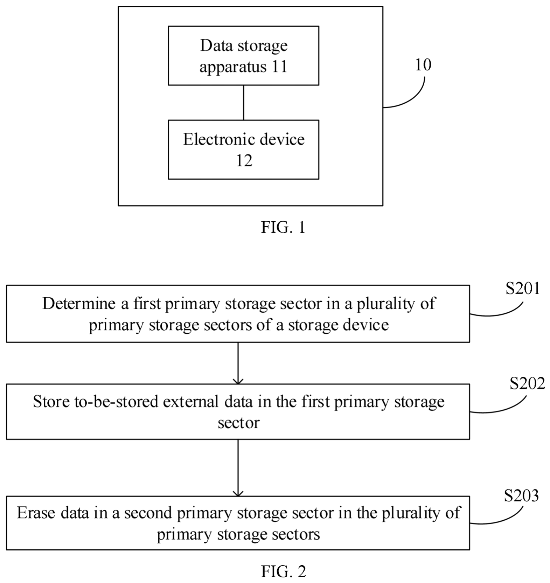

FIG. 1 is a schematic diagram of an architecture of a data storage system according to this application. A technical solution of an embodiment of this application may be applied to the data storage system shown in FIG. 1. As shown in FIG. 1, the data storage system 10 includes a data storage apparatus 11 and a storage device 12.

The data storage apparatus 11 is directly or indirectly connected to the storage device 12. This connection relationship may be implemented in a wired or wireless manner. This is not limited in this embodiment of this application.

The data storage apparatus 11 may obtain data from the storage device 12, or may store data in the storage device 12.

It should be noted that the data storage apparatus 11 and the storage device 12 may be mutually independent devices, or may be integrated into a same device. This is not specifically limited in this application.

In the following embodiments provided in this application, an example in which the data storage apparatus 11 and the storage device 12 are disposed independently from each other is used for description in this application.

In actual application, a data storage method provided in an embodiment of this application may be applied to the data storage apparatus 11, or may be applied to an apparatus included in the data storage apparatus 11.

The following describes, with reference to accompanying drawings, the data storage method provided in an embodiment of this application with an example in which the data storage method is applied to the data storage apparatus 11.

FIG. 2 is a schematic flowchart of a data storage method according to this application. As shown in FIG. 2, the method includes the following steps.

S201: A data storage apparatus determines a first primary storage sector in a plurality of primary storage sectors of a storage device.

The primary storage sector includes a plurality of primary storage pages, the primary storage page includes a first storage area, the first storage area is configured to store external data, a first primary storage page does not exist in a plurality of primary storage pages of the first primary storage sector, and external data exists in a first storage area of the first primary storage page.

It should be noted that the storage device may be a flash memory.

The storage device may further include a status storage area, and the status storage area is configured to store an erase count of the storage device.

A quantity of the plurality of primary storage sectors may be 8. This is not specifically limited in this application.

A capacity of the primary storage page may be 256 bytes. This is not specifically limited in this application.

The primary storage page may further include a second storage area, a third storage area, and a fourth storage area, the second storage area is configured to store a check value of the external data in the first storage area of the primary storage page, the third storage area is configured to store a write count of the primary storage page, and the fourth storage area is configured to store a location identifier value of the primary storage page.

The second storage area may be located behind the first storage area, the third storage area may be located before the first storage area, and the fourth storage area may be located before the third storage area. This is not specifically limited in this application.

When the capacity of the primary storage page is 256 bytes, a capacity of the second storage area may be 2 bytes, a capacity of the third storage area may be 1 byte, and a capacity of the fourth storage area may be 1 byte. This is not specifically limited in this application.

The storage device may further include a backup storage sector corresponding to each primary storage sector, the backup storage sector includes a plurality of backup storage pages, the plurality of primary storage pages of the primary storage sector are in a one-to-one correspondence with the plurality of backup storage pages of the backup storage sector corresponding to the primary storage sector, a capacity of the primary storage page and a capacity of the backup storage page are the same, the backup storage page includes a fifth storage area, a sixth storage area, a seventh storage area, and an eighth storage area, the fifth storage area is configured to store mirror data of the external data in the first storage area of the primary storage page corresponding to the backup storage page, the sixth storage area is configured to store a check value of external data in the fifth storage area of the backup storage page, the seventh storage area is configured to store a write count of the backup storage page, and the eighth storage area is configured to store a location identifier value of the backup storage page.

For example, if the storage device includes four primary storage sectors, each of the primary storage sectors includes 16 primary storage pages, each of the primary storage pages includes 256 bytes, and in the 256 bytes, the 1st byte is the fourth storage area, the 2nd byte is the third storage area, last two bytes constitute the second storage area, and the remaining bytes constitute the first storage area, the storage device also includes four backup storage sectors, each of the backup storage sectors includes 16 backup storage pages, each of the backup storage pages includes 256 bytes, and in the 256 bytes, the 1st byte is the eighth storage area, the 2nd byte is the seventh storage area, last two bytes constitute the sixth storage area, and the remaining bytes constitute the fifth storage area.

The check value may be a value of a cyclic redundancy check (cyclic redundancy check, CRC).

The 1st primary storage sector corresponds to the 1st backup primary storage sector, the 2nd primary storage sector corresponds to the 2nd backup storage sector, the 3rd primary storage sector corresponds to the 3rd backup storage sector, and the 4th primary storage sector corresponds to the 4th backup storage sector.

The 1st primary storage page of the 1st primary storage sector corresponds to the 1st backup primary storage page of the 1st backup storage sector, the 2nd primary storage page of the 1st primary storage sector corresponds to the 2nd backup primary storage page of the 1st backup storage sector, the 3rd primary storage page of the 1st primary storage sector corresponds to the 3rd backup primary storage page of the 1st backup storage sector, and the like.

In a possible implementation, the data storage apparatus traverses a plurality of primary storage pages of the 1st primary storage sector in the plurality of primary storage sectors, determines whether the first primary storage page exists in the plurality of primary storage pages, and determines the 1st primary storage sector as a first primary storage sector if the first primary storage page does not exist in the plurality of primary storage pages.

If the first primary storage page exists in the plurality of primary storage pages, the data storage apparatus determines the 1st primary storage sector as a third primary storage sector, traverses a plurality of primary storage pages of the 2nd primary storage sector in the plurality of primary storage sectors, determines whether the first primary storage page exists in the plurality of primary storage pages, and determines the 2nd primary storage sector as a first primary storage sector if the first primary storage page does not exist in the plurality of primary storage pages.

If the first primary storage page exists in the plurality of primary storage pages, the data storage apparatus determines the 2nd primary storage sector as a third primary storage sector, traverses a plurality of primary storage pages of the 3rd primary storage sector in the plurality of primary storage sectors, determines whether the first primary storage page exists in the plurality of primary storage pages, and determines the 3rd primary storage sector as a first primary storage sector if the first primary storage page does not exist in the plurality of primary storage pages.

If the first primary storage page exists in the plurality of primary storage pages, the data storage apparatus determines the 3rd primary storage sector as a third primary storage sector, and so on until the first primary storage sector in the plurality of primary storage sectors of the storage device is determined.

S202: The data storage apparatus stores to-be-stored external data in the first primary storage sector.

In a possible implementation, when the primary storage page further includes the second storage area, the third storage area, and the fourth storage area, the data storage apparatus determines a plurality of second primary storage pages in the first primary storage sector and to-be-stored external sub-data corresponding to each of the second primary storage pages based on the to-be-stored external data and a capacity of the first storage area.

The to-be-stored external data includes a plurality of pieces of to-be-stored external sub-data, and the second primary storage page is configured to store corresponding external sub-data.

The data storage apparatus determines a first check value of each of the plurality of pieces of to-be-stored external sub-data, stores the to-be-stored external sub-data in a first storage area of a corresponding second primary storage page, stores the first check value in a second storage area of the corresponding second primary storage page, increases a location identifier value of a third primary storage page in the plurality of second primary storage pages by 1, and increases a write count of the corresponding second primary storage page by 1.

External data exists in a first storage area of the third primary storage page.

It should be noted that, for specific descriptions of this possible implementation, refer to descriptions in a subsequent part of specific implementations of this application. Details are not described in this application.

In still another possible implementation, when the primary storage page includes only the first storage area, the data storage apparatus stores the to-be-stored external data in a first storage area of the primary storage page of the first primary storage sector.

S203: The data storage apparatus erases data in a second primary storage sector in the plurality of primary storage sectors.

The second primary storage sector is a primary storage sector next to the first primary storage sector.

In a possible implementation, the data storage apparatus determines the primary storage sector next to the first primary storage sector, and determines the primary storage sector as the second primary storage sector.

The data storage apparatus erases the data in the second primary storage sector.

It should be noted that, for a specific solution of data erasing in this possible implementation, refer to an existing solution. Details are not described herein in this application.

Based on this solution, an empty first primary storage sector in the plurality of primary storage sectors of the storage device is determined, the to-be-stored external data is stored in the first primary storage sector, and the data in the second primary storage sector in the plurality of primary storage sectors is erased. Because the second primary storage sector is the primary storage sector next to the first primary storage sector, the data in the next primary storage sector can be erased while the external data is stored in the first primary storage sector. In this way, the storage device always has an empty primary storage sector. Therefore, when data is stored again subsequently, the data may be directly stored without performing data erasing first, thereby improving data storage efficiency.

The foregoing generally describes the data storage method provided in this application. The following further describes the data storage method provided in this application with reference to the accompanying drawings.

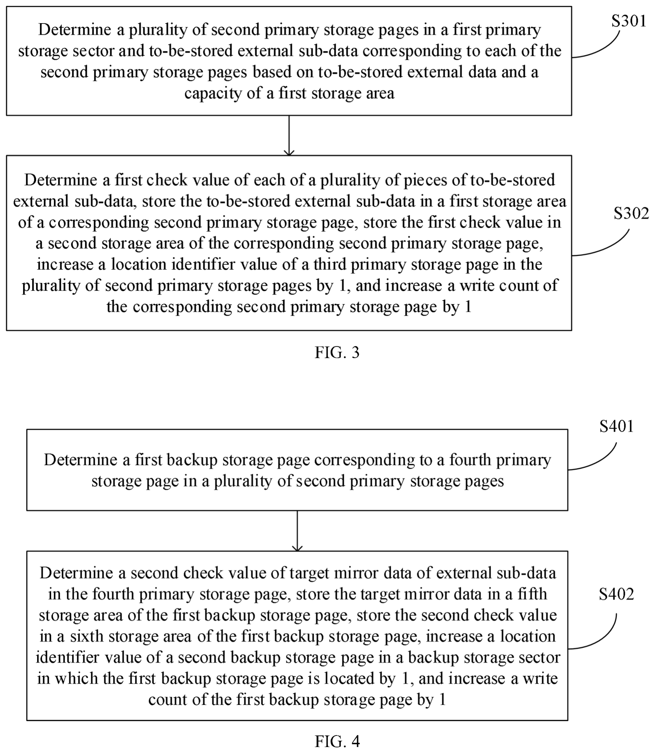

In a design, when the storage page includes the second storage area, the third storage area, and the fourth storage area, refer to FIG. 3, which is a schematic flowchart of another data storage method according to this application. As shown in FIG. 3, S202 provided in a specific implementation of this application may specifically include the following plurality of steps.

S301: The data storage apparatus determines a plurality of second primary storage pages in the first primary storage sector and to-be-stored external sub-data corresponding to each of the second primary storage pages based on the to-be-stored external data and a capacity of the first storage area.

The to-be-stored external data includes a plurality of pieces of to-be-stored external sub-data, and the second primary storage page is configured to store corresponding external sub-data.

In a possible implementation, the data storage apparatus uses the capacity of the first storage area as a division step size, to divide the to-be-stored external data into a plurality of pieces of to-be-stored external sub-data.

The data storage apparatus determines that the 1st piece of to-be-stored external sub-data corresponds to the 1st second primary storage page in the first primary storage sector.

The data storage apparatus determines that the 2nd piece of to-be-stored external sub-data corresponds to the 2nd second primary storage page in the first primary storage sector.

The data storage apparatus determines that the 3rd piece of to-be-stored external sub-data corresponds to the 3rd second primary storage page in the first primary storage sector.

By analogy, the data storage apparatus determines the plurality of second primary storage pages in the first primary storage sector and the to-be-stored external sub-data corresponding to each of the second primary storage pages.

S302: The data storage apparatus determines a first check value of each of the plurality of pieces of to-be-stored external sub-data, stores the to-be-stored external sub-data in a first storage area of a corresponding second primary storage page, stores the first check value in a second storage area of the corresponding second primary storage page, increases a location identifier value of a third primary storage page in the plurality of second primary storage pages by 1, and increases a write count of the corresponding second primary storage page by 1.

External data exists in a first storage area of the third primary storage page.

In a possible implementation, the data storage apparatus first determines a first check value of the 1st piece of to-be-stored external sub-data, stores the first check value in a second storage area of the 1st second primary storage page, stores the 1st piece of to-be-stored external sub-data in a first storage area of the 1st second primary storage page, and increases a write count of the 1st second primary storage page by 1.

Because external data exists in the first storage area of the 1st second primary storage page, the data storage apparatus determines the 1st second primary storage page as a third primary storage page, and increases a location identifier value of the third primary storage page by 1.

Then, the data storage apparatus determines a first check value of the 2nd piece of to-be-stored external sub-data, stores the first check value in a second storage area of the 2nd second primary storage page, stores the 2nd piece of to-be-stored external sub-data in a first storage area of the 2nd second primary storage page, and increases a write count of the 2nd second primary storage page by 1.

Because external data exists in the first storage areas of the 1st second primary storage page and the 2nd second primary storage page, the data storage apparatus determines the 1st second primary storage page and the 2nd second primary storage page as third primary storage pages, and increases location identifier values of the third primary storage pages by 1.

Then, the data storage apparatus determines a first check value of the 3rd piece of to-be-stored external sub-data, stores the first check value in a second storage area of the 3rd second primary storage page, stores the 3rd piece of to-be-stored external sub-data in a first storage area of the 3rd second primary storage page, and increases a write count of the 3rd second primary storage page by 1.

Because external data exists in the first storage areas of the 1st second primary storage page, the 2nd second primary storage page, and the 3rd second primary storage page, the data storage apparatus determines the 1st second primary storage page, the 2nd second primary storage page, and the 3rd second primary storage page as third primary storage pages, and increases location identifier values of the third primary storage pages by 1.

By analogy, the data storage apparatus completes storage of each piece of to-be-stored external sub-data.

Based on this solution, when the storage page includes the second storage area, the third storage area, and the fourth storage area, the plurality of second primary storage pages in the first primary storage sector and the to-be-stored external sub-data corresponding to each of the second primary storage pages are determined based on the to-be-stored external data and the capacity of the first storage area, the first check value of each piece of the plurality of pieces of to-be-stored external sub-data is determined, the to-be-stored external sub-data is stored in the first storage area of the corresponding second primary storage page, the first check value is stored in the second storage area of the corresponding second primary storage page, the location identifier value of the third primary storage page having the external data in the plurality of second primary storage pages is increased by 1, and the write count of the corresponding second primary storage page is increased by 1, thereby implementing the solution of storing the to-be-stored external data in the first primary storage sector.

In a design, refer to FIG. 4, which is a schematic flowchart of another data storage method according to this application. As shown in FIG. 4, the data storage method provided in this application may further include the following plurality of steps.

S401: The data storage apparatus determines a first backup storage page corresponding to a fourth primary storage page in the plurality of second primary storage pages.

The fourth primary storage page is a primary storage page having a latest write moment in the plurality of second primary storage pages.

In a possible implementation, after writing data into a second primary storage page, the data storage apparatus determines the second primary storage page as a primary storage page having a latest write moment, that is, the fourth primary storage page, and then the data storage apparatus determines a backup storage page corresponding to the fourth primary storage page, and determines the backup storage page as the first backup storage page.

S402: The data storage apparatus determines a second check value of target mirror data of external sub-data in the fourth primary storage page, stores the target mirror data in a fifth storage area of the first backup storage page, stores the second check value in a sixth storage area of the first backup storage page, increases a location identifier value of a second backup storage page in a backup storage sector in which the first backup storage page is located by 1, and increases a write count of the first backup storage page by 1.

External data exists in a fifth storage area of the second backup storage page.

In a possible implementation, the data storage apparatus determines the target mirror data of the external sub-data in the fourth primary storage page.

Then, the data storage apparatus determines the second check value of the target mirror data, stores the target mirror data in the fifth storage area of the first backup storage page, stores the second check value in the sixth storage area of the first backup storage page, and increases the write count of the first backup storage page by 1.

Then, the data storage apparatus finds the second backup storage page in the backup storage sector in which the first backup storage page is located, and increases the location identifier value of the second backup storage page by 1.

Based on this solution, the first backup storage page corresponding to the fourth primary storage page in the plurality of second primary storage pages is determined, the second check value of the target mirror data of the external sub-data in the fourth primary storage page is determined, the target mirror data is stored in the fifth storage area of the first backup storage page, the second check value is stored in the sixth storage area of the first backup storage page, the location identifier value of the second backup storage page in the backup storage sector in which the first backup storage page is located is increased by 1, and the write count of the first backup storage page is increased by 1. Because the fourth primary storage page is the primary storage page having the latest write moment in the plurality of second primary storage pages, after data is stored in the primary storage page, mirror data of the data is stored in a corresponding backup storage page for data backup.

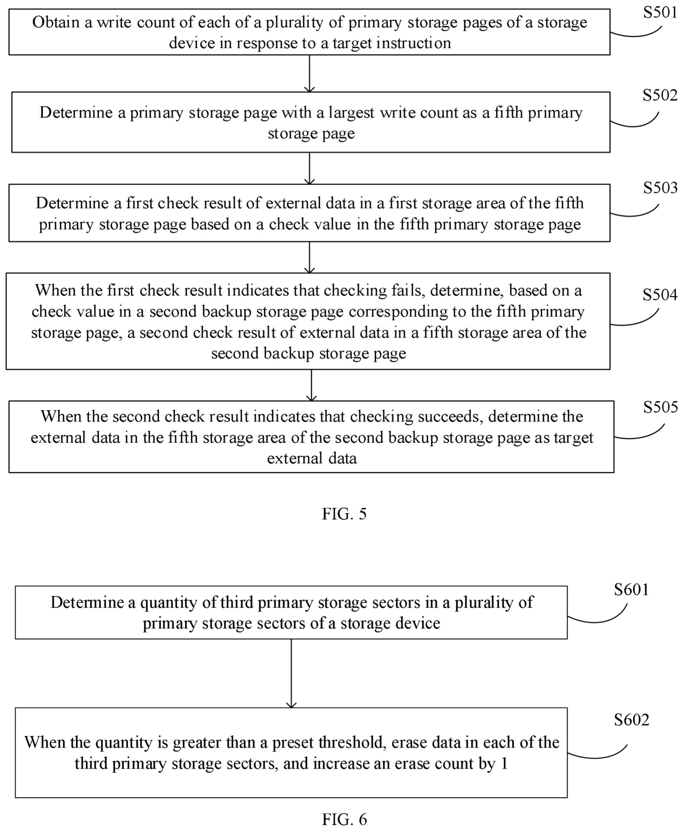

In a design, refer to FIG. 5, which is a schematic flowchart of another data storage method according to this application. As shown in FIG. 5, the data storage method provided in this application may further include the following plurality of steps.

S501: The data storage apparatus obtains the write count of each of the plurality of primary storage pages of the storage device in response to a target instruction.

The target instruction is used to obtain target external data in a first storage area of a fifth primary storage page of the storage device, and the fifth primary storage page is a primary storage page having a latest write moment in the plurality of primary storage pages of the storage device.

It should be noted that the target instruction may be a data obtaining instruction. This is not specifically limited in this application.

In a possible implementation, the data storage apparatus receives the target instruction, and obtains a write count in a third storage area in each primary storage page of the storage device in response to the target instruction.

S502: The data storage apparatus determines a primary storage page with a largest write count as the fifth primary storage page.

In a possible implementation, the data storage apparatus determines a largest value in a plurality of write counts, and determines a primary storage page corresponding to the largest value as the fifth primary storage page.

S503: The data storage apparatus determines a first check result of external data in the first storage area of the fifth primary storage page based on a check value in the fifth primary storage page.

In a possible implementation, the data storage apparatus calculates a third check value of the external data in the first storage area of the fifth primary storage page, and obtains a first check value in a second storage area of the fifth primary storage page.

The data storage apparatus compares the third check value with the first check value, and determines, when the third check value is the same as the first check value, that the first check result indicates that checking succeeds, or determines, when the third check value is different from the first check value, that the first check result indicates that checking fails.

When the first check result indicates that checking succeeds, the data storage apparatus determines the external data in the first storage area of the fifth primary storage page as the target external data.

When the first check result indicates that checking fails, the data storage apparatus performs S504.

S504: When the first check result indicates that checking fails, the data storage apparatus determines, based on a check value in a second backup storage page corresponding to the fifth primary storage page, a second check result of external data in a fifth storage area of the second backup storage page.

In a possible implementation, when the first check result indicates that checking fails, the data storage apparatus determines the second backup storage page corresponding to the fifth primary storage page, calculates a fourth check value of the external data in the fifth storage area of the second backup storage page, and obtains a second check value in a sixth storage area of the second backup storage page.

The data storage apparatus compares the fourth check value with the second check value, and determines, when the fourth check value is the same as the second check value, that the second check result indicates that checking succeeds, or determines, when the fourth check value is different from the second check value, that the second check result indicates that checking fails.

When the second check result indicates that checking fails, the data storage apparatus performs initialization processing on the fifth primary storage page and the second backup storage page.

When the first check result indicates that checking succeeds, the data storage apparatus performs S505.

S505: When the second check result indicates that checking succeeds, the data storage apparatus determines the external data in the fifth storage area of the second backup storage page as the target external data.

Based on this solution, because data is sequentially stored in the plurality of primary storage pages during data storage, it may be considered that data in the primary storage page having the largest write count is written the latest. Therefore, when the target external data is obtained, the first check result of the external data in the first storage area of the fifth primary storage page is determined based on the check value in the fifth primary storage page having the largest write count; when the first check result indicates that checking fails, the second check result of the external data in the fifth storage area of the second backup storage page is determined based on the check result in the second backup storage page corresponding to the fifth primary storage page; and when the second check result indicates that checking succeeds, the external data in the fifth storage area of the second backup storage page is determined as the target external data, thereby determining correctness of the data in the primary storage page, and obtaining target data from a corresponding backup storage page when the data in the primary storage page is incorrect.

In a design, when the storage device includes the status storage area, refer to FIG. 6, which is a schematic flowchart of another data storage method according to this application. As shown in FIG. 6, the data storage method provided in this application may further include the following plurality of steps.

S601: The data storage apparatus determines a quantity of third primary storage sectors in the plurality of primary storage sectors of the storage device.

The first primary storage page exists in a plurality of primary storage pages of the third primary storage sector.

In a possible implementation, the data storage apparatus traverses a plurality of primary storage pages of the 1st primary storage sector in the plurality of primary storage sectors, determines whether the first primary storage page exists in the plurality of primary storage pages, and determines the 1st primary storage sector as a first primary storage sector if the first primary storage page does not exist in the plurality of primary storage pages.

If the first primary storage page exists in the plurality of primary storage pages, the data storage apparatus determines the 1st primary storage sector as a third primary storage sector, traverses a plurality of primary storage pages of the 2nd primary storage sector in the plurality of primary storage sectors, determines whether the first primary storage page exists in the plurality of primary storage pages, and determines the 2nd primary storage sector as a first primary storage sector if the first primary storage page does not exist in the plurality of primary storage pages.

If the first primary storage page exists in the plurality of primary storage pages, the data storage apparatus determines the 2nd primary storage sector as a third primary storage sector, traverses a plurality of primary storage pages of the 3rd primary storage sector in the plurality of primary storage sectors, determines whether the first primary storage page exists in the plurality of primary storage pages, and determines the 3rd primary storage sector as a first primary storage sector if the first primary storage page does not exist in the plurality of primary storage pages.

If the first primary storage page exists in the plurality of primary storage pages, the data storage apparatus determines the 3rd primary storage sector as a third primary storage sector. By analogy, the data storage apparatus determines each of the primary storage sectors to obtain the quantity of third primary storage sectors.

S602: When the quantity is greater than a preset threshold, the data storage apparatus erases data in each of the third primary storage sectors, and increases the erase count by 1.

It should be noted that the preset threshold may be 3, This is not specifically limited in this application.

In a possible implementation, the data storage apparatus determines whether the quantity of third primary storage sectors is greater than the preset threshold.

If the quantity of third primary storage sectors is greater than the preset threshold, the data storage apparatus erases the data in each of the third primary storage sectors, and increases the erase count by 1; or the data storage apparatus erases the data in each of the third primary storage sectors and data in a backup storage sector corresponding to each of the third primary storage sectors, and increases the erase count by 1.

If the quantity of third primary storage sectors is not greater than the preset threshold, the data storage apparatus performs no action.

Based on this solution, when the storage device includes the status storage area, the quantity of third primary storage sectors in the plurality of primary storage sectors of the storage device is determined. Because the first primary storage page exists in the plurality of primary storage pages of the third primary storage sector, when the quantity is greater than the preset threshold, it indicates that storage space of the storage device is insufficient. Then, the data in each of the third primary storage sectors is erased, and the erase count is increased by 1. On the one hand, the storage space of the storage device can be released, and on the other hand, the erase count of the storage device can be recorded.

In the embodiments of this application, the data storage apparatus may be divided into functional modules based on the foregoing method examples.

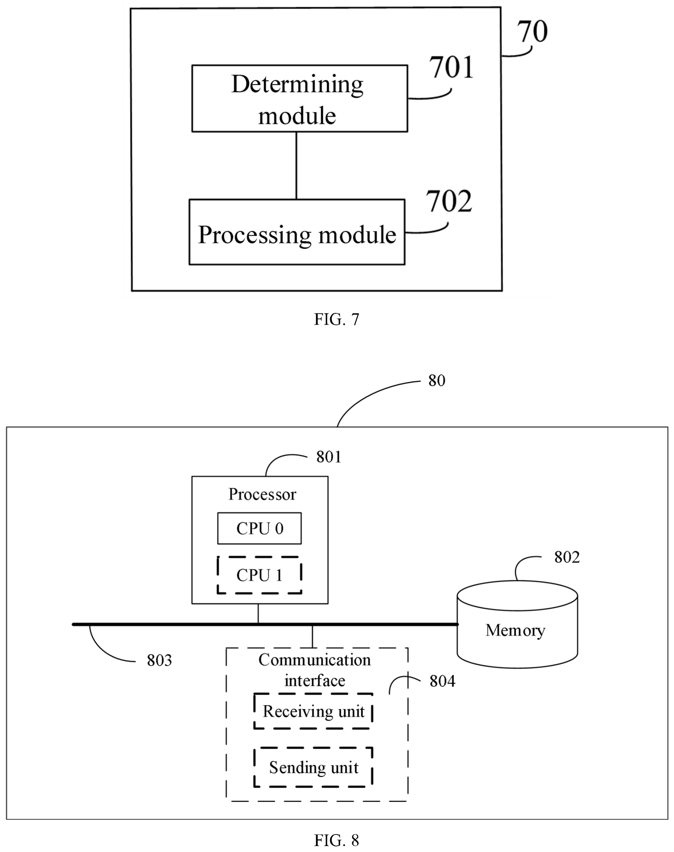

When division into the functional modules is used, refer to FIG. 7, which is a schematic diagram of a structure of a data storage apparatus. As shown in FIG. 7, the data storage apparatus 70 includes a determining module 701 and a processing module 702.

In some embodiments, the data storage apparatus 70 may further include a storage module (not shown in FIG. 7) configured to store program instructions and data.

The determining module 701 is configured to determine a first primary storage sector in a plurality of primary storage sectors of a storage device, where the primary storage sector includes a plurality of primary storage pages, the primary storage page includes a first storage area, the first storage area is configured to store external data, a first primary storage page does not exist in a plurality of primary storage pages of the first primary storage sector, and external data exists in a first storage area of the first primary storage page; the processing module 702 is configured to store to-be-stored external data in the first primary storage sector; and the processing module 702 is further configured to erase data in a second primary storage sector in the plurality of primary storage sectors, where the second primary storage sector is a primary storage sector next to the first primary storage sector.

All related content of the steps in the foregoing method embodiment may be cited to function descriptions of corresponding functional modules. Details are not described herein again.

When the functions of the functional modules are implemented in a form of hardware, refer to FIG. 8, which is a schematic diagram of a structure of another data storage apparatus. As shown in FIG. 8, the data storage apparatus 80 includes a processor 801, a memory 802, and a bus 803. The processor 801 may be connected to the memory 802 by using the bus 803.

It should be noted that the structure shown in FIG. 8 does not constitute a limitation on the data storage apparatus 80. In addition to the components shown in FIG. 8, the data storage apparatus 80 may include more or fewer components than those shown in the figure, combine some components, or have different component arrangements.

In an example, with reference to FIG. 7, functions implemented by the determining module 701 and the processing module 702 in the data storage apparatus 70 are the same as the functions of the processor 801 in FIG. 8.

Optionally, as shown in FIG. 8, the data storage apparatus 80 provided in this embodiment of this application may further include a communication interface 804.

A computer-readable storage medium is provided, having a computer program or instructions stored thereon. When the computer program or the instructions are executed, a computer is enabled to perform the steps in the method procedure shown in the foregoing method embodiment.

An embodiment of this application provides a computer program product including instructions. When the instructions are run on a computer, the computer is enabled to perform the steps in the method procedure shown in the foregoing method embodiment.

An embodiment of this application provides a chip system, including a processor and an interface circuit. The interface circuit is configured to receive a computer program or instructions and transmit the computer program or the instructions to the processor. The processor is configured to execute the computer program or the instructions, to enable the chip system to perform the steps in the method procedure shown in the foregoing method embodiment.

The data storage apparatus, the computer-readable storage medium, and the computer program product provided in the embodiments may be applied to the foregoing data storage method provided in the embodiments. Therefore, for a technical effect that can be obtained by the data storage apparatus, the computer-readable storage medium, and the computer program product, refer to the foregoing method embodiment. Details are not described herein in this embodiment of this application.

## Claims

1. A data storage method, **characterized by** comprising:
determining a first primary storage sector in a plurality of primary storage sectors of a storage device, wherein the primary storage sector comprises a plurality of primary storage pages, the primary storage page comprises a first storage area, the first storage area is configured to store external data, a first primary storage page does not exist in a plurality of primary storage pages of the first primary storage sector, and external data exists in a first storage area of the first primary storage page;
storing to-be-stored external data in the first primary storage sector; and
erasing data in a second primary storage sector in the plurality of primary storage sectors, wherein the second primary storage sector is a primary storage sector next to the first primary storage sector.

2. The method according to claim 1, **characterized in that** the primary storage page further comprises a second storage area, a third storage area, and a fourth storage area, the second storage area is configured to store a check value of the external data in the first storage area of the primary storage page, the third storage area is configured to store a write count of the primary storage page, and the fourth storage area is configured to store a location identifier value of the primary storage page; and the storing to-be-stored data in the first primary storage sector comprises:
determining a plurality of second primary storage pages in the first primary storage sector and to-be-stored external sub-data corresponding to each of the second primary storage pages based on the to-be-stored external data and a capacity of the first storage area, wherein the to-be-stored external data comprises a plurality of pieces of to-be-stored external sub-data, and the second primary storage page is configured to store corresponding external sub-data; and
determining a first check value of each of the plurality of pieces of to-be-stored external sub-data, storing the to-be-stored external sub-data in a first storage area of a corresponding second primary storage page, storing the first check value in a second storage area of the corresponding second primary storage page, increasing a location identifier value of a third primary storage page in the plurality of second primary storage pages by 1, and increasing a write count of the corresponding second primary storage page by 1, wherein external data exists in a first storage area of the third primary storage page.

3. The method according to claim 2, **characterized in that** the storage device further comprises a backup storage sector corresponding to each primary storage sector, the backup storage sector comprises a plurality of backup storage pages, the plurality of primary storage pages of the primary storage sector are in a one-to-one correspondence with the plurality of backup storage pages of the backup storage sector corresponding to the primary storage sector, a capacity of the primary storage page and a capacity of the backup storage page are the same, the backup storage page comprises a fifth storage area, a sixth storage area, a seventh storage area, and an eighth storage area, the fifth storage area is configured to store mirror data of the external data in the first storage area of the primary storage page corresponding to the backup storage page, the sixth storage area is configured to store a check value of external data in the fifth storage area of the backup storage page, the seventh storage area is configured to store a write count of the backup storage page, and the eighth storage area is configured to store a location identifier value of the backup storage page.

4. The method according to claim 3, **characterized by** further comprising:
determining a first backup storage page corresponding to a fourth primary storage page in the plurality of second primary storage pages, wherein the fourth primary storage page is a primary storage page having a latest write moment in the plurality of second primary storage pages; and
determining a second check value of target mirror data of external sub-data in the fourth primary storage page, storing the target mirror data in a fifth storage area of the first backup storage page, storing the second check value in a sixth storage area of the first backup storage page, increasing a location identifier value of a second backup storage page in a backup storage sector in which the first backup storage page is located by 1, and increasing a write count of the first backup storage page by 1, wherein external data exists in a fifth storage area of the second backup storage page.

5. The method according to claim 4, **characterized by** further comprising:
obtaining the write count of each of the plurality of primary storage pages of the storage device in response to a target instruction, wherein the target instruction is used to obtain target external data in a first storage area of a fifth primary storage page of the storage device, and the fifth primary storage page is a primary storage page having a latest write moment in the plurality of primary storage pages of the storage device;
determining a primary storage page with a largest write count as the fifth primary storage page;
determining a first check result of external data in the first storage area of the fifth primary storage page based on a check value in the fifth primary storage page;
when the first check result indicates that checking fails, determining, based on a check value in a second backup storage page corresponding to the fifth primary storage page, a second check result of external data in a fifth storage area of the second backup storage page; and
when the second check result indicates that checking succeeds, determining the external data in the fifth storage area of the second backup storage page as the target external data.

6. The method according to claim 5, **characterized in that** when the second check result indicates that checking fails, the method further comprises:
performing initialization processing on the fifth primary storage page and the second backup storage page.

7. The method according to any one of claims 1 to 6, **characterized in that** the storage device further comprises a status storage area, the status storage area is configured to store an erase count of the storage device, and the method further comprises:
determining a quantity of third primary storage sectors in the plurality of primary storage sectors of the storage device, wherein the first primary storage page exists in a plurality of primary storage pages of the third primary storage sector; and
when the quantity is greater than a preset threshold, erasing data in each of the third primary storage sectors, and increasing the erase count by 1.

8. A data storage apparatus, **characterized by** comprising a determining module and a processing module, wherein
the determining module is configured to determine a first primary storage sector in a plurality of primary storage sectors of a storage device, wherein the primary storage sector comprises a plurality of primary storage pages, the primary storage page comprises a first storage area, the first storage area is configured to store external data, a first primary storage page does not exist in a plurality of primary storage pages of the first primary storage sector, and external data exists in a first storage area of the first primary storage page;
the processing module is configured to store to-be-stored external data in the first primary storage sector; and
the processing module is further configured to erase data in a second primary storage sector in the plurality of primary storage sectors, wherein the second primary storage sector is a primary storage sector next to the first primary storage sector.

9. A data storage apparatus, **characterized by** comprising a processor, wherein the processor is coupled to a memory, the memory is configured to store a program or instructions, and when the program or the instructions are executed by the processor, the apparatus is enabled to perform the method according to any one of claims 1 to 7.

10. A computer-readable storage medium, having a computer program or instructions stored thereon, **characterized in that** when the computer program or the instructions are executed, a computer is enabled to perform the method according to any one of claims 1 to 7.
